# EUROPÄISCHE PATENTSCHRIFT

(11) **EP 1 497 719 B1**
(45) Veröffentlichungstag und Bekanntmachung des Hinweises auf die Patenterteilung: **21.02.2018**
(21) Anmeldenummer: 02774336.8
(22) Anmeldetag: 12.09.2002
(51) Int. Cl.: G06F 9/445

(54) **VERFAHREN ZUR INSTALLATION VON EINEM SOFTWAREMODUL IN EINEM GERÄT**
METHOD FOR INSTALLING A SOFTWARE MODULE IN A DEVICE
PROC D POUR INSTALLER UN MODULE LOGICIEL DANS UN APPAREIL

(30) Priorität: 30.11.2001 DE 10158991
(43) Veröffentlichungstag der Anmeldung: 19.01.2005
(73) Patentinhaber: ROBERT BOSCH GMBH, 70442 Stuttgart (DE)
(72) Erfinder: DE BOER, Gerrit, 31139 Hildesheim (DE); KNOPKE, Juergen, 32427 Minden-Rodenbeck (DE)
(86) Internationale Anmeldenummer: PCT/DE2002/003388
(87) Internationale Veröffentlichungsnummer: WO 2003/048932

(56) Entgegenhaltungen:
- EP-A- 0 945 792
- EP-A- 1 056 001
- US-A- 5 966 540
- US-B1- 6 269 480

## Beschreibung

### Stand der Technik

Die Erfindung geht aus von einem Verfahren zur Installation von einem Softwaremodul in einem Gerät nach der Gattung des unabhängigen Patentanspruchs.

Aus der Offenlegungsschrift D1 196 19 491 A1 ist es bereits bekannt, dass die Installation von Softwaremodulen, insbesondere zur Erweiterung und Erneuerung der Systemsoftware beziehungsweise der Treiber, ein Mechanismus vorgesehen ist, der beispielsweise ein Empfängerendgerät in die Lage versetzt, dies sicher und kontrolliert durchzuführen. Dies wird durch die Benutzung einer maschinenunabhängigen, sicheren Scriptsprache beispielsweise Perl und Java erleichtert. Aus US 5 966 540 ist ein Verfahren und Gerät zum Installieren einer JAVA-Anwendung auf einem Computersystem bekannt, wobei zunächst das Betriebssystem des Computersystems bestimmt wird, anschließend zu dem Betriebsystem korrespondierende Installationskommandos ausgewählt werden, welche dann durch das Betriebssystem ausgeführt werden.

### Vorteile der Erfindung

Das erfindungsgemäße Verfahren zur Installation von einem Softwaremodul in einem Gerät mit den Merkmalen des unabhängigen Patentanspruchs hat demgegenüber den Vorteil, dass eine leichte Nachrüstbarkeit des Betriebssystems möglich ist, wobei die systemunabhängige Softwareumgebung dazu genutzt wird. Dabei muß diese systemunabhängige Softwareumgebung, beispielsweise ein Java-Prozessor keine Kenntnis über das Betriebssystem selbst aufweisen. Dies ermöglicht eine leichte Portierbarkeit der Softwareumgebung und erleichtert weiterhin die Aufrüstung beziehungsweise Nachrüstung des Betriebssystems.

Zu dem Betriebssystem gehörig werden Softwaretreiber gezählt. Das erfindungsgemäße Verfahren ermöglicht die Fehlerbehandlung sowie das Ausbauen der Systemfähigkeiten durch die Nachinstallation von entsprechenden Softwaremodulen, beispielsweise Betriebssystem-Patchers, Treibern, Betriebssystem-Applikationen und Diagnoseroutinen von Systemen, die sich im Feld befinden, beispielsweise über das Internet in Verbindung mit einer Luftschnittstelle, also einer Funkschnittstelle. Die in der Softwareumgebung implementierten Mechanismen sind plattformunabhängig. Bei Wechsel der Plattform, also des Betriebssystems beziehungsweise der Hardware ist lediglich ein entsprechender Installationsmanager für das Betriebssystem nachzuladen, während die Installationsschnittstelle zum Aufruf gleichbleibt.

Die Datei kann auf den verschiedensten Wegen in das System gelangen. Sobald die Datei sich im Zugriffsbereich der Softwareumgebung befindet, kann die Installation beginnen. Dies ist insbesondere bei Telematik-Endgeräten relevant, wo die Übertragung von CD oder drahtgebunden beziehungsweise drahtlos von einem Server oder per Speicherkarte wahrscheinlich ist. Aus der Sicht der Quelle der Software, die die Datei erzeugt, steht ein transparenter Transportweg in dem Betriebssystembereich zum Betriebssystem Installationsmanager zur Verfügung. Die Quelle braucht keine Kenntnisse über den Transportweg, also drahtlos, drahtgebunden, zu haben. Der Aufbau der Datei ist vollkommen unabhängig vom Transportweg, da die Mechanismen zur Authentisierung, Transportsicherung inklusive eines Integritätstests mittels der Softwareumgebung, also beispielsweise Java, realisiert werden.

Durch die in den abhängigen Ansprüchen aufgeführten Maßnahmen und Weiterbildungen sind vorteilhafte Verbesserungen des im unabhängigen Patentanspruch angegebenen Verfahrens zur Installation von einem Softwaremodul in einem Gerät möglich.

Besonders vorteilhaft ist, dass die Datei zusätzlich Daten über die Herkunft des Softwaremoduls und/oder wenigstens eine Signatur und/oder eine Verschlüsselungsinformation und/oder eine textuelle Beschreibung und/oder wenigstens ein Softwarewerkzeug aufweist. Dadurch ist es einerseits möglich, die Installation sicherer zu gestalten und zu vermeiden, dass eine ungewollte Installation vorgenommen wird, die zu einer Fehlfunktion beziehungsweise Zerstörung des Geräts führen könnte. Weiterhin ermöglicht die Übertragung von Softwarewerkzeugen eine leichte Installation des Softwaremoduls. Die textuelle Beschreibung erleichtert einem Nutzer die Installation der Software.

Darüber hinaus ist es von Vorteil, dass die Datei, die auch als Container bezeichnet werden kann, in verschiedene Felder aufgeteilt ist. Das erste Feld ist für die Identifikation vorgesehen, also beispielsweise ein sogenannter "Header". Dieser Header weist eine bestimmte Identifikation für das Softwaremodul auf. In einem zweiten Feld sind die notwendigen Ressourcen, also beispielsweise der Speicherplatz, die Treiber usw., die für das Softwaremodul notwendig sind, angegebenen. In einem dritten Feld sind die Installationskommandos angegebenen, beispielsweise "Copy" oder "Execute". In einem vierten Feld sind die eigentlichen Daten des Softwaremoduls angegebenen. Dazu gehört der Dateiname, die Größe des Dateinamens, die Größe der Daten, die Daten selbst und ein Prüffeld. Die Daten des Softwaremoduls können komprimiert vorliegen und sind dann zu dekomprimieren und zwar durch den Installationsmanager. Es ist auch möglich, eine Formatierung dieser Daten des Softwaremoduls durchzuführen, um sie in die ausführbare Form umzuwandeln. In einem fünften Feld kann eine Signatur angegebenen sein, die eine erhöhte Sicherheit des Installationsprozesses ermöglicht.

Über den Installationsmanager ist weiterhin eine Fernwartung beziehungsweise eine Ferndiagnose des Geräts möglich.

Das erfindungsgemäße Gerät weist dann dazu einen Prozessor, einen Speicher, eine Kommunikationsschnittstelle mit einem Betriebssystem und der systemunabhängigen Softwareumgebung auf, wobei hier erfindungsgemäß eine Installationsschnittstelle in der Softwareumgebung und der Installationsmanager im Betriebssystem vorhanden sind.

### Zeichnung

Ausführungsbeispiele der Erfindung sind in der Zeichnung dargestellt und werden in der nachfolgenden Beschreibung näher erläutert. Es zeigen Figur 1 ein Blockschaltbild des erfindungsgemäßen Geräts, Figur 2 die Softwarearchitektur, Figur 3 ein Flußdiagramm des erfindungsgemäßen Verfahrens und Figur 4 eine Dateistruktur.

### Beschreibung

Wenn bei einem per Software konfigurierbaren System der Funktionsumfang oder die Leistungsfähigkeit verbessert werden soll, ist die Installation eines neuen Softwaremoduls erforderlich. Einige Softwareumgebungen, wie beispielsweise die Java Virtual Machine (JVM), ermöglichen in bestimmten Konfigurationen die bequeme Installation von Software in Form von Paketen, beispielsweise Applets oder JAR-Dateien, die von einem Server, beispielsweise im Internet geladen und dann direkt gestartet werden können. Da die Java-Software prinzipiell plattformunabhängig ist, das heißt ausführbar in jeder passenden JVM, sind die für die Softwareinstallation verwendeten Java-Module ebenfalls plattformunabhängig und damit auf jeder Rechnerplattform mit einer JVM übertragbar.

Allerdings ermöglicht der beschriebene Vorgang der Softwareinstallation zunächst nur die Modifikation der Software, die innerhalb der JVM abläuft. Ein Zugriff auf Software außerhalb der JVM auf Software, die direkt auf dem Betriebssystem aufsetzt oder die Bestandteil des Betriebssystems ist, beispielsweise Treiber oder Applikationssoftware, ist nicht ohne weiteres möglich. In diesem Fall, z.B. bei der Installation von Software für einen Arbeitsplatzrechner wird in der Regel ein Softwarepaket in Verbindung mit einem Installationsprogramm interaktiv installiert.

Für Geräte wie es Telematikgeräte sind, Rundfunkempfänger und Navigationsgeräte, ist jedoch eine möglichst einfache vom Benutzer abgeschirmte Installation von Softwaremodulen vorzusehen. Dies wird erfindungsgemäß dadurch erreicht, dass die Softwareumgebung, das heißt, eine JVM, eine Installationsschnittstelle aufweist, die die Übertragung einer Datei mit den notwendigen Installationsdaten zu einem Installationsmanager ermöglicht, der selbst im Betriebssystem angeordnet ist. Der Installationsmanager führt dann abgeschirmt von der Softwareumgebung die eigentliche Installation durch. Insbesondere ist damit der Fernzugriff, die Ferninstallation, die Fernwartung und die Ferndiagnose in einfacher Weise möglich. Durch die Trennung von Betriebssystem und Softwareumgebung ist weiterhin die Importierbarkeit von solchen Softwareumgebungen wie JVM auch für solche Installationen gewährleistet. Gleichzeitig ermöglicht die JVM auch die Installation von Betriebssystemen bei relevanten Softwaremodulen.

Der Transport und die Bereitstellung der Softwaremodule werden durch Verfahren durchgeführt, die durch die JVM bereitgestellt werden. Anschließend wird die Installation der Betriebssystem-Softwaremodule aus der JVM heraus initiiert, indem ein entsprechendes Installationsprogramm, das ist der Installationsmanager, im Betriebssystem aufgerufen wird. Dabei ist die Schnittstelle zu dem Installationsprogramm auf der Ebene des Betriebssystems so konzipiert, dass innerhalb der JVM keinerlei Information bezüglich der Installation der Betriebssystemsoftware wie Systemressourcen, Art des Betriebssystems, Zielort des Softwaretest vorliegen müssen.

Die Erfindung dient der flexiblen und ausbaufähigen Modifikation des Softwarebestands auf der Ebene des Betriebssystems eines Rechnersystems. Für den Transport der Software auf das System werden plattformunabhängige Mechanismen genutzt, die durch eine Softwareumgebung bereitgestellt werden, z.B. "Download" von einer Java-Software in eine JVR. Dazu gehören Verfahren zur Authentisierung, Verschlüsselung und zum sicheren Transport der Software auf das System, die von Java bereitgestellt werden. In diesem Zuge wird die Software in einem Paket, beispielsweise JAR-Archiv, geladen und gespeichert. Für die Installation der Software auf die Ebene des Betriebssystems wird aus der JVM ein Installationsmanager im Betriebssystem aufgerufen, dem die geladene Software, das Softwaremodul, übergeben wird und der die Installation auf Betriebssystemebene vornimmt. Der Installationsmanager ist selbst plattformabhängig und muß für jede Zielplattform bereitgestellt werden. Der Aufruf des Installationsmanagers ist allerdings für alle Plattformen identisch, das heißt, der Zugang, also die Installationsschnittstelle zum Installationsmanager ist aus Sicht einer Softwareumgebung wie die JVM immer gleich:
Dem Installationsmanager wird nur eine einzige Datei, im Folgenden auch als "Container" bezeichnet, übergeben, welche die gesamten Informationen für die Installation des Softwaremodul beinhaltet.

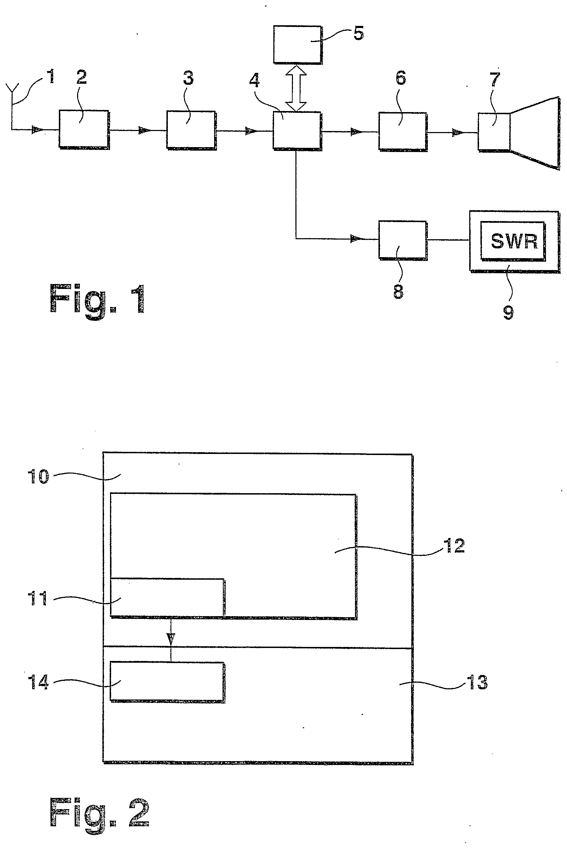

Figur 1 zeigt als Blockschaltbild ein erfindungsgemäßes Gerät, hier ein Rundfunkempfänger, der insbesondere für den Empfang von digitalen Rundfunksignalen ausgebildet ist, wie es DAB (Digital Audio Broadcasting) oder DRM (Digital Radio Mondiale) oder DVB (Digital Video Broadcasting) sind. Diese breitbandigen Übertragungsverfahren ermöglichen die Übertragung von beliebigen Daten, wie es auch Softwaremodule sind, die in das Betriebssystem eines Rundfunkempfängers geladen werden sollen. Der Rundfunkempfänger weist eine Antenne 1 auf, die an einen Eingang eines Hochfrequenzempfängers 2 angeschlossen ist, der eine Verstärkung, Filterung und Umsetzung der empfangenen Rundfunksignale durchführt. Dem Hochfrequenzempfänger 2 kann auch ein A/D-Wandler zugeordnet sein, der eine Digitalisierung der empfangenen Rundfunksignale besorgt.

Innerhalb eines Digitalteils 3 werden dann die digitalen Rundfunksignale einer Kanaldekodierung und beziehungsweise auch einer Quellendekodierung unterzogen. Die so dekodierten Nutzdaten werden dann in einem Prozessor 4 untersucht und dann vor einer Anwendung, also beispielsweise einer Audio- und/oder einer Videowiedergabe weiter gegeben. Handelt es sich jedoch um Softwaremodule, die in das Betriebssystem des Rundfunkempfängers geladen werden sollen, dann führt der Prozessor 4 mit einer Softwareumgebung, also mit einer Java Virtual Machine, die im Speicher 5 geladen ist, über den der Prozessor mit einem Daten-Ein-Ausgang verbunden ist, einen Installationsprozeß durch. Sind jedoch Audio-Daten im Datenstrom vorhanden, dann werden diese über eine Audio-Signalverarbeitung 6 und einen Lautsprecher 7 wiedergegeben. Sind Video-Daten in den empfangenen Daten enthalten, dann werden über eine Video-Signalverarbeitung 8 und einen Bildschirm 9 diese Daten hier wie SWR wiedergegeben. Als Bildschirm 9 können verschiedene Anzeigentechniken zum Einsatz kommen. Dazu zählen neben einer LCD andere Flachbildschirmtechniken, aber auch eine Kathodenstrahlröhre.

In Figur 2 ist dargestellt, wie die Software, die der Prozessor 4 lädt, aufgebaut ist. Auf einem Betriebssystem 13 ist eine plattformunabhängige Softwareumgebung 10 aufgebaut, die hier eine Java Virtual Machine, also die JVM 10, ist. In der JVM 10 befindet sich ein Java Framework 12, in dem die Applikationen, die Kommunikation mit Servern und andere Anwendungen durchgeführt werden. In dem Java Framework 12 wird auch die Installationsschnittstelle 11 bereitgestellt, die die Verbindung zu einem Installationsmanager 14, der im Betriebssystem 13 angeordnet ist, herstellt. Über die Schnittstelle 11 werden dem Installationsmanager 14 Parameter übergeben. Diese Parameter geben den Ort der Datei an, in der die Installationsdaten angegeben sind. Dieser Teil wird auch als Container bezeichnet. Der das zu installierende Softwaremodul beinhaltende Container kann neben dem eigentlichen Code für das Softwaremodul und entsprechenden Installationskommandos zusätzlich Information zur Herkunft der Softwaresignaturen, Verschlüsselungsinformationen, textuelle Beschreibungen bis hin zur für die Installation erforderliche temporäre Softwaretools, das sind Installationstest und die Inbetriebnahmetools, enthalten. Damit kontrolliert der Container auch Installation und Inbetriebnahme des Softwaremoduls.

Der Installationsmanager 14 extrahiert den Container und interpretiert die Installationsbefehle, die hier als commands bezeichnet werden. Bei ihm kann es sich um Aufrufe der Betriebssystemsoftware, im einfachsten Fall das Kopieren von Dateien in das Dateisystem oder um Aufrufe von temporären Softwarewerkzeugen handeln, die mit Hilfe vorheriger Unterdateien, also Subcontainern, installiert wurden. Dies beinhaltet auch weiterführende Installationsentscheidungen, z.B. ob das System nach der Installation gebootet (gestartet) werden muß. Diese beim Installationsvorgang ablaufende Mechanismen laufen vollständig abgeschirmt von der JVM 10 ab, das heißt, die JVM 10 besitzt keinerlei Information bezüglich der Installation der Betriebssystemsoftware wie Systemressourcen, Art des Betriebssystems, Ziel der Software und Test. Die zu installierende Betriebssystemsoftware, also das Softwaremodul, wird aus Sicht der Quelle des Softwarecontainers transparent durch die JVM 10 in den Bereich des Betriebssystem 13 übertragen und dort installiert.

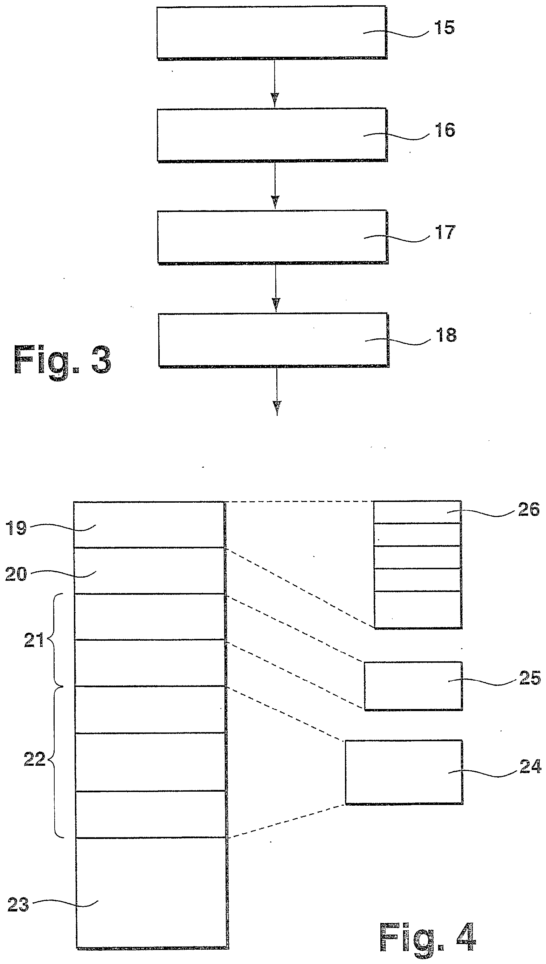

Figur 3 zeigt als Flußdiagramm das erfindungsgemäße Verfahren. In Verfahrensschritt 15 wird das zu installierende Softwaremodul über eine Datenempfangseinrichtung empfangen. Anstatt der in Figur 1 dargestellten Rundfunksignale, die für das Empfangen des Softwaremoduls vorgesehen sind, können auch Speichermedien verwendet werden, eine Duplex-Funkverbindung wie beispielsweise der Mobilfunk (UMTS), eine leitungsgebundene Verbindung beispielsweise über das Telefonnetz oder eine satellitengestützte Datenverbindung. Hat das erfindungsgemäße Gerät in der plattformunabhängigen Softwareumgebung 10 erkannt, dass es sich um ein Softwaremodul handelt, das zu dem Betriebssystem 13 installiert werden soll, dann übergibt die JVM 10 entsprechende Parameter auf die Datei, die das Softwaremodul erhält, über die Schnittstelle 11 an einen Installationsmanager 14 diese Daten. Mit diesen Daten kann der Installationsmanager 14 dann die Datei laden und die Installation in den Verfahrensschritten 17 und 18 durchführen.

Figur 4 zeigt einen beispielhaften Aufbau der Datei, die der Installationsmanager 14 zur Installation des Softwaremoduls verwendet. Die Datei weist ein erstes Feld Header 19 auf, das sich wie im Block 26 dargestellt, in verschiedene Unterfelder aufteilt.

Nach dem Header 19 folgt ein zweites Feld 20 für die notwendigen Ressourcen, die zur Installation des Softwaremoduls vorgesehen sind. Auf das zweite Feld 20 folgt ein drittes Feld 21, das aus zwei sogenannten Subcontainern besteht, in denen die Kommandos angegeben sind, die der Installationsmanager 14 auszuführen hat. Block 25 weist darauf hin, dass solche Kommandos mit Copy oder Execute bezeichnet sein können. In einem vierten Feld 22 werden weitere Subcontainer angegeben, in denen letztlich die Daten enthalten sind, die das Softwaremodul selbst ausmachen. Zusätzlich zu dem reinen Code für das Softwaremodul sind auch Angaben über die Größe, den Dateinamen und Prüffelder vorhanden. Auch Angaben von Bildern, die Größe der Flags und die Größe der Befehlszeile sind hier angegeben. Dies wird über den Block 24 dargestellt. Im letzten Feld 23 ist eine Overall-Signatur angegeben.

Das Verfahren ist nachrüstbar. Auf einem System, auf dem bislang noch kein Installationsmanager installiert ist, kann im ersten Schritt mittels Java ein entsprechender Installationsmanager per JAR-Datei geladen und in das Betriebsdateisystem kopiert werden. Die JAR-Datei enthält in dem Fall neben dem Code für den Installationsmanager und entsprechende Methoden zum Kopieren des Codes in das Betriebssystem Dateisystem auch die Schnittstellen für den späteren Zugriff auf den Installationsmanager für den Software-Download, der hier dargestellt wurde. Auch später kann noch mittels des existierenden Installationsmanager der Installationsmanager neu installiert oder ergänzt werden, beispielsweise um den Umfang für die Container-Befehle oder dessen Leistungsfähigkeit zu erhöhen.

Liegt ein System mit Rückkanal vor, beispielsweise ein Telematikgerät mit Internetanbindung, dann kann in einer Weiterbildung das Installationsergebnis in der Form positiv, negativ oder eine Fehlermeldung zum Absender der Software zurückgeschickt weren, um bei einer misslungenen Installation weitere Schritte einleiten zu können. Beispielsweise eine Wiederholung des Downloads mit entsprechend modifiziertem Inhalt.

## Patentansprüche

1. Verfahren zur Installation von einem Softwaremodul in einem Gerät, wobei auf einem Prozessor (4) in dem Gerät ein Betriebssystem (13) und eine geräteunabhängige Softwareumgebung (10) betrieben werden, wobei die Installation des Softwaremoduls im Betriebssystem (13) über die Softwareumgebung (10) erreicht wird, wobei
die Softwareumgebung (10) eine Installationsschnittstelle (11) zu einem Installationsmanager (14) im Betriebssystem (13) für die Installation des Softwaremoduls nutzt, und dass dann der Installationsmanager (14) die Installation des Softwaremoduls durchführt, **dadurch gekennzeichnet, dass** über die Installationsschnittstelle wenigstens ein Installationskommando übergeben wird, die das Softwaremodul und wenigstens ein Installationskommando aufweist.

2. Verfahren nach Anspruch 1, **dadurch gekennzeichnet, dass** die Datei zusätzlich Daten über die Herkunft des Softwaremoduls und/oder wenigstens eine Signatur und/oder eine Verschlüsselungsinformation und/oder eine textuelle Beschreibung und/oder wenigstens ein Softwarewerkzeug aufweist.

3. Verfahren nach Anspruch 1 oder 2, **dadurch gekennzeichnet, dass** die Datei mit einem ersten Feld (19) für eine Identifikation, einem zweiten Feld (20) für die notwendigen Ressourcen für das Softwaremodul, einem dritten Feld (21) für das wenigstens eine Installationskommando, einem vierten Feld (22) für das Softwaremodul, in einem fünften Feld (23) für die Signatur verwendet wird.

4. Verfahren nach einem der vorhergehenden Ansprüche,
**dadurch gekennzeichnet, dass** über den Installationsmanager (14) eine Fernwartung und/oder Ferndiagnose durchgeführt wird.

5. Verfahren nach einem der vorhergehenden Ansprüche,
**dadurch gekennzeichnet, dass** über das Ergebnis der Installation eine Meldung abgegeben wird.

6. Gerät zur Durchführung des Verfahrens nach einem der Ansprüche 1 bis 5, **dadurch gekennzeichnet, dass** das Gerät einen Prozessor (4), einen Speicher (5) und eine Kommunikationsschnittstelle (1, 2) aufweist, wobei das Betriebssystem (13) und die Softwareumgebung (10) sowie die Installationsschnittstelle (11) und der Installationsmanager (14) im Speicher (5) abgelegt sind.

7. Gerät nach Anspruch 6, **dadurch gekennzeichnet, dass** das Gerät als Telematikgerät vorzugsweise Rundfunkempfänger oder Navigationsgerät oder Auto-PC ausgebildet ist.

## Claims

1. Method for installing a software module in a device, wherein an operating system (13) and a device-independent software environment (10) are operated on a processor (4) in the device, wherein the installation of the software module is achieved in the operating system (13) via the software environment (10), wherein the software environment (10) uses an installation interface (11) to an installation manager (14) in the operating system (13) for installation of the software module, and that the installation manager (14) then performs installation of the software module, **characterized in that** the installation interface is used to transfer at least one installation command that has the software module and at least one installation command.

2. Method according to Claim 1, **characterized in that** the file additionally has data about the origin of the software module and/or at least one signature and/or a piece of encryption information and/or a text description and/or at least one software tool.

3. Method according to Claim 1 or 2, **characterized in that** the file is used with a first field (19) for an identification, a second field (20) for the necessary resources for the software module, a third field (21) for the at least one installation command, a fourth field (22) for the software module, in a fifth field (23) for the signature.

4. Method according to one of the preceding claims, **characterized in that** the installation manager (14) is used to perform remote maintenance and/or remote diagnosis.

5. Method according to one of the preceding claims, **characterized in that** a report is delivered about the result of the installation.

6. Device for performing the method according to one of Claims 1 to 5, **characterized in that** the device has a processor (4), a memory (5) and a communication interface (1, 2), wherein the operating system (13) and the software environment (10) and also the installation interface (11) and the installation manager (14) are stored in the memory (5).

7. Device according to Claim 6, **characterized in that** the device is in the form of a telematics device, preferably a broadcast radio receiver or navigation device or car PC.

## Revendications

1. Procédé d'installation d'un module logiciel dans un appareil, un système d'exploitation (13) et un environnement logiciel (10) indépendant de l'appareil étant exécutés sur un processeur (4) dans l'appareil, l'installation du module logiciel dans le système d'exploitation (13) étant atteinte par le biais de l'environnement logiciel (10), l'environnement logiciel (10) utilisant une interface d'installation (11) avec un gestionnaire d'installation (14) dans le système d'exploitation (13) pour l'installation du module logiciel, et que le gestionnaire d'installation (14) réalise alors l'installation du module logiciel, **caractérisé en ce qu'**au moins une instruction d'installation est transmise par le biais de l'interface d'installation, laquelle possède le module logiciel et au moins une instruction d'installation.

2. Procédé selon la revendication 1, **caractérisé en ce que** le fichier possède en plus des données à propos de l'origine du module logiciel et/ou au moins une signature et/ou une information de cryptage et/ou une description textuelle et/ou au moins un outil logiciel.

3. Procédé selon la revendication 1 ou 2, **caractérisé en ce que** le fichier est utilisé avec un premier champ (19) pour une identification, un deuxième champ (20) pour les ressources nécessaires pour le module logiciel, un troisième champ (21) pour l'au moins une instruction d'installation, un quatrième champ (22) pour le module logiciel, dans un cinquième champ (23) pour la signature.

4. Procédé selon l'une des revendications précédentes, **caractérisé en ce qu'**une télémaintenance et/ou un télédiagnostic sont effectués par le biais du gestionnaire d'installation (14).

5. Procédé selon l'une des revendications précédentes, **caractérisé en ce qu'**un message est délivré à propos du résultat de l'installation.

6. Appareil pour mettre en oeuvre le procédé selon l'une des revendications 1 à 5, **caractérisé en ce que** l'appareil possède un processeur (4), une mémoire (5) et une interface de communication (1, 2), le système d'exploitation (13) et l'environnement logiciel (10) ainsi que l'interface d'installation (11) et le gestionnaire d'installation (14) étant enregistrés dans la mémoire (5).

7. Appareil selon la revendication 6, **caractérisé en ce que** l'appareil est réalisé sous la forme d'un appareil de télématique, de préférence un récepteur radioélectrique ou un appareil de navigation ou encore un PC de voiture.
